(19) Europäisches Patentamt

European Patent Office

Office européen des brevets

(11) Veröffentlichungsnummer: **0 249 998 B1**

(12) **EUROPÄISCHE PATENTSCHRIFT**

(45) Veröffentlichungstag der Patentschrift: **23.12.92**

(21) Anmeldenummer: **87108840.7**

(22) Anmeldetag: **20.06.87**

(51) Int. Cl.⁵: **C08L 25/08**, C08L 51/00

(54) **Mischung aus thermoplastischen Bestandteilen, Verfahren zur Herstellung einer matten thermoplastischen Formmasse aus dieser Mischung und Formteile daraus.**

(30) Priorität: **20.06.86 DE 3620684**

(43) Veröffentlichungstag der Anmeldung:
**23.12.87 Patentblatt 87/52**

(45) Bekanntmachung des Hinweises auf die
Patenterteilung:
**23.12.92 Patentblatt 92/52**

(84) Benannte Vertragsstaaten:
**BE DE FR GB NL SE**

(56) Entgegenhaltungen:

**PATENT ABSTRACTS OF JAPAN, Vol. 9 Nr.
66 (C-271)[1789] 26.03.1985**

(73) Patentinhaber: **BASF Aktiengesellschaft
Carl-Bosch-Strasse 38
W-6700 Ludwigshafen(DE)**

(72) Erfinder: **Ostermayer, Bertram, Dr.
Pfaffenpfad 14
W-6701 Roedersheim-Gronau(DE)**
Erfinder: **McKee, Graham Edmund, Dr.
Kastanienweg 8
W-6940 Weinheim(DE)**
Erfinder: **Ruppmich, Karl
Koenigsbacher Strasse 134
W-6700 Ludwigshafen(DE)**

**Beschreibung**

Die Erfindung betrifft eine reaktionsfähige Mischung aus 2 thermoplastischen Bestandteilen,

A einem ersten thermoplastischen Harz, enthaltend

$a_1$ einen vinylaromatischen Kohlenwasserstoff mit 8 bis 12 C-Atomen und

$a_2$ ein weiteres monoethylenisch ungesättites Monomeres aus der Gruppe von Acrylnitril, Methylmethacrylat, N-Phenylmaleinimid und

B einem weiteren thermoplastischen Harz, enthaltend eine Mischung aus

$b_1$ einem thermoplastischen reaktive Gruppen aufweisenden Copolymerisat und

$b_2$ einem Elastomeren, das reaktive Gruppen aufweist.

Zum Stand der Technik nennen wir:

(1) US-PS 3 449 470

(2) US-PS 4 169 869

(3) DE-OS 33 22 748

(4) DE-OS 34 05 938

(5) DE-OS 34 07 018

(6) EP 139271 und

(7) DE-OS 33 40 591

In (1) bis (7) sind matte, thermoplastische Formmassen, meist auf Basis von ABS, beschrieben. Zur Erzielung der matten Oberfläche werden verschiedene Prinzipien verwendet, z.B. wird in (1) und (2) ein Gemisch aus unterschiedlichen Kautschuken, einem Nitrilkautschuk und Polybutadien angewendet, um mattes ABS zu erzeugen. In (3) wird ein agglomerierter Kautschuk verwendet, um zu diesem Ziel zu gelangen. In (4) bis (7) werden matte ABS Formmassen beschrieben, wobei in die Bestandteile der Formmassen saure und basische Gruppen eingebaut werden, die teilweise eine Unverträglichkeit der Bestandteile bewirken oder ionischen Bindungen ausbilden können. Dabei spielen jedoch die Verarbeitungsbedingungen eine wichtige Rolle.

Die Nachteile der aus (1) bis (7) bekannten Formmassen sind eine schlechte Mechanik bei matter Oberfläche. Zudem hängt die Mattigkeit stark von den Spritzbedingungen ab. Dies ist besonders gravierend wenn die Bindungsknüpfung, zwischen der Kautschukphase und der Polymermatrix, nur ionischer Art ist.

Bei den letztgenannten Patenten, z.B. (4) bis (7), werden basische heterocyclische Verbindungen eingesetzt, die aber zu Verfärbung der Produkte führen können. Dies ist besonders bei acrylnitrilhaltigen Polymeren der Fall.

Es bestand daher die Aufgabe eine Mischung zur Verfügung zu stellen, aus der matte thermoplastische Formmassen zugänglich sind, wobei die nach dem Erhitzen der Mischung erhältlichen thermoplastischen Formmassen (Umsetzung der Mischung in der Schmelze) eine von den Spritzbedingungen unabhängige matte Oberfläche aufweisen.

Diese Aufgabe wird gelöst durch eine thermoplastische Mischung aus 2 Komponenten A und B, wobei die Komponente B ein thermoplastisches Harz mit reaktiven Gruppen und ein mit reaktiven Gruppen ausgestattetes Elastomer darstellt. Die Bestandteile der Komponente B der erfindungsgemäßen Mischung können beim Erhitzen kovalente Bindungen eingehen.

Die Erfindung betrifft daher eine (reaktionsfähige) Mischung aus thermoplastischen Bestandteilen, enthaltend

A 20 - 80 Gew.-%, bezogen auf A + B, eines ersten thermoplastischen Harzes, enthaltend

$a_1$ 60 - 90 Gew.-%, bezogen auf A, mindestens eines vinylaromatischen Kohlenwasserstoffs mit 8 bis 12 C-Atomen

$a_2$ 40 - 10 Gew.-%, bezogen auf A, mindestens eines weiteren monoethylenisch ungesättigten Monomeren aus der Gruppe von Acrylnitril, Methylmethacrylat, N-Phenylmaleinimid oder Mischungen davon

B 80 - 20 Gew.-%, bezogen auf A + B, eines weiteren thermoplastischen Harzes, enthaltend eine Mischung aus

$b_1$ einem thermoplastischen reaktive Gruppen aufweisenden Copolymerisat und

$b_2$ einem Elastomeren, das reaktive Gruppen aufweist.

Diese Mischung ist dadurch gekennzeichnet, daß

die Mischung B enthält, jeweils bezogen auf B,

$b_1$ 50 - 90 Gew.-% des reaktiven Copolymeristes, das aufgebaut ist aus

$b_{11}$ mindestens 60 Gew.-% mindestens eines vinylaromatischen Kohlenwasserstoffs mit 8 bis 12 C-Atomen

$b_{12}$ 15 - 35 Gew.-% mindestens eines monoethylenisch ungesättigten Monomeren aus der Gruppe von Acrylnitril, Methylmethacrylat, N-Phenylmaleinimid oder Mischungen davon

$b_{13}$ 1 -20 Gew.-% mindestens eines weiteren monoethylenisch ungesättigten Monomeren aus der Gruppe von Maleinsäure, Maleinsäureanhydrid, Glycidylmethacrylat, Vinyloxazolin oder Mischungen davon

und

$b_2$ 50 - 10 Gew.-% eines reaktive Gruppen aufweisenden Elastomeren, wobei die reaktiven Gruppen von Monomeren stammen, ausgewählt aus der Gruppe von Maleinsäure, Maleinsäureanhydrid, Glycidylmethacrylat, Vinyloxazolin oder Mischungen davon und einpolymerisiert sind in

$b_{21}$ lineare oder verzweigte Copolymere mit Tg < 0°C oder aufgepfropft sind auf

$b_{22}$ übliche Elastomere auf Basis von Polymeren des Butadiens, Copolymerisaten des Butadiens mit bis zu 30 Gew.-% an Comonomeren, wie Styrol und Acrylnitril, Polymeren oder Copolymeren der Acrylsäureester von Alkoholen mit 2 bis 8 C-Atomen, Polymeren der Ethylen-Propylen- oder Ethylen-Propylen-Dien-Reihe (EP- oder EPDM-Kautschuke).

Nachstehend werden der Aufbau der reaktionsfähigen Mischung aus den Komponenten, Aufbau und Herstellung der Komponenten und die Herstellung einer thermoplastischen Formmasse aus der reaktionsfähigen erfindungsgemäßen Mischung beschrieben.

Die erfindungsgemäße reaktionsfähige Mischung enthält mindestens die Komponenten A und B, vorzugsweise besteht sie aus diesen. Sie kann zusätzlich noch übliche Zusatzstoffe, Komponente C, aufweisen.

Die erfindungsgemäße Mischung ist aufgebaut aus, jeweils bezogen auf A + B:

A: 20 bis 80 Gew.-%, vorzugsweise 30bis 70 Gew.-%, insbesondere 35 bis 65 Gew.-%

B: 80 bis 20 Gew.-%, vorzugsweise 70 bis 30 Gew.-%, insbesondere 35 bis 65 Gew.-%.

Bezogen auf 100 Gew.-Teile A + B kann sie enthalten:

C: 0,5 bis 30 Gew.-Teile, insbesondere 1 bis 25 Gew.-Teile Zusatzstoffe.

## Komponente A

Die Komponente A stellt ein thermoplastisches Harz dar, enthaltend,

$a_1$ 60 - 90 Gew.-%, vorzugsweise 65 - 85, bezogen auf A, mindestens eines vinylaromatischen Kohlenwasserstoffs mit 8 bis 12 C-Atomen.

$a_2$ 40 - 10 Gew.-%, vorzugsweise 35 - 15, bezogen auf A, mindestens eines weiteren monoethylenisch ungesättigten Monomeren aus der Gruppe von Acrylnitril, Methylmethacrylat, N-Phenylmaleinimid oder Mischungen davon.

Als vinylaromatische Kohlenwasserstoffe als einzupolymerisierende Monomere kommen in Betracht: Styrol, $\alpha$-Methylstyrol, p-Methylstyrol, Vinyltoluol oder Mischungen davon. Bevorzugt wird Styrol aus dieser Gruppe.

Beispielhaft für das thermoplastische Harz A sind Copolymere aus Styrol, alpha-Methylstyrol, p-Methylstyrol, Vinyltoluol einerseits und Acrylnitril, Methylmethacrylat, N-Phenylmaleinimid andererseits.

Besonders bevorzugt werden jedoch als Komponente A schlagfeste Thermoplaste verwendet. Diese enthalten, bezogen auf 100 Gew.-Teile A, 10 - 60 Gew.-Teile eines Pfropfmischpolymerisates $a_3$, aufgebaut aus

$a_{31}$ 30 - 70 Gew.-% eines Elastomeren auf Basis von Homopolybutadien, Copolymerisaten des Butadiens mit bis zu 30 Gew.-% an Comonomeren aus der Gruppe Styrol Acrylnitril, Acrylsäurealkylester von Alkoholen mit 1 bis 8 C-Atomen oder Mischungen daraus

und

$a_{32}$ 70 - 30 Gew.-% einer Pfropfhülle aus den Monomeren $a_1$ und $a_2$ im Gew.-Verhältnis 60 bis 90 $a_1$/40 bis 10 $a_2$

Besonders bevorzugt werden als Komponente A sogenannte ABS oder ASA Pfropfkautschuke verwendet, die vorzugsweise in Emulsion hergestellt werden. Sie sollten eine mittlere Teilchengröße unter 0,5 $\mu$m besitzen. Damit ist gemeint, daß 50 Gew.-% der Teilchen einen Durchmesser unter, und 50 Gew.-% der Teilchen über 0,5 $\mu$m besitzen ($d_{50}$-Wert der integralen Masseverteilung).

Die Herstellung der kautschukfreien thermoplastischen Harze ist an sich bekannt. Sie sollen Viskositätszahlen im Bereich von 50 bis 90 ml/g aufweisen.

Die Herstellung der kautschukhaltigen thermoplastischen Harze ist dem Fachmann bekannt. Es können auch die sich im Handel befindlichen ASA und ABS Polymerisate eingesetzt werden.

## Komponente B

Die Komponente B ist ein weiteres thermoplastisches Harz (Mischung), enthaltend

$b_1$  50-90 Gew.-%, vorzugsweise 60-80 Gew.-%, bezogen auf B, eines thermoplastischen, reaktive Gruppen aufweisenden, Copolymerisates und

$b_2$  50-10 Gew.-%, vorzugsweise 40-20 Gew.-%, bezogen auf B, eines Elastomeren, das reaktive Gruppen enthält.

Aufbau von $b_1$

Das reaktive Gruppen aufweisende Copolymerisat $b_1$ enthält einpolymerisiert, jeweils bezogen auf $b_1$,

$b_{11}$)  mindestens 60 Gew.-%, vorzugsweise 60 bis 80 Gew.-% mindestens eines vinylaromatischen Kohlenwasserstoffs mit 8 bis 12 C-Atomen

$b_{12}$  15-35 Gew.-%, vorzugsweise 17,5 bis 25 Gew.-%, mindestens eines monoethylenisch ungesättigten Monomeren aus der Gruppe von Acrylnitril, Methylmethacrylat, N-Phenylmaleinimid oder Mischungen davon

$b_{13}$  1 -20 Gew.-%, vorzugsweise 1 bis 10 Gew.-%, mindestens eines weiteren monoethylenisch ungesättigten Monomeren aus der Gruppe von Maleinsäure, Maleinsäureanhydrid, Glycidylmethacrylat, Vinyloxazolin oder Mischungen davon

Als vinylaromatische Monomere $b_{11}$ kommen in Betracht Styrol, $\alpha$-Methylstyrol, p-Methylstyrol oder Mischungen davon. Bevorzugt wird ausschließlich Styrol verwendet, und zwar insbesondere in Verbindung mit Acrylnitril und MSA als Monomer $b_{12}$ resp. $b_{13}$, wobei 68-74 Gew.-% Styrol, 19-23 Gew.-% AN und 3-11 Gew.-% MSA bevorzugt sind. Die Herstellung derartiger Polymerisate ist an sich bekannt und ist in US 2 989 517 beschrieben.

Aufbau von $b_2$

Die reaktiven Gruppen des Elastomers $b_2$ sind ausgewählt aus ethylenisch ungesättigten Monomeren der Gruppe Maleinsäure, Maleinsäureanhydrid, Glycidylmethacrylat, Vinyloxazolin oder Mischungen davon. Diese Gruppen sind einpolymerisiert in

$b_{21}$  lineare oder verzweigte Copolymere mit Tg < 0°C oder aufgepropft auf

$b_{22}$  übliche Elastomere auf Basis von Polymeren des Butadiens, Copolymerisaten des Butadiens mit bis zu 30 Gew.-% an Comonomeren, wie Styrol und Acrylnitril, Polymeren oder Copolymeren der Acrylsäureester von Alkoholen mit 2 bis 8 C-Atomen, Polymeren der Ethylen-Propylen- oder Ethylen-Propylen-Dien-Reihe (EP- oder EPDM-Kautschuke) als Pfropfgrundlage.

Die linearen oder verzweigten Copolymerisate $b_{21}$) sind vorzugsweise Ethylen-n-Butylacrylatcopolymerisate, die aufgebaut sind aus, bezogen auf $b_{21}$),

20-98 Gew.-%     Ethylen

1,5-60 Gew.-%     n-Butylacrylat

0,5-40 Gew.-%     Glycidylmethacrylat, Maleinsäure, Maleinsäureanhydrid, Vinyloxazolin oder Gemischen davon.

Deren Herstellung erfolgt z.B. in an sich bekannter Weise. Die Produkte sind z.B. in der DE-OS 3 220 380 beschrieben.

Die Pfropfung der Pfropfgrundlage mit reaktiven Monomeren zu $b_{22}$ kann entweder in Dispersion, in Lösung oder in der Schmelze stattfinden. Der Gehalt an reaktiven Gruppen beträgt, bezogen auf $b_{22}$, 0.5 bis 20 Gew.%. Die reaktiven Gruppen können mit anderen Monomeren copolymerisiert werden. Bei der Herstellung der Produkte in Dispersion werden die Latexteilchen gepropft mit einer Mischung aus reaktiven Gruppen enthaltenden Monomeren und anderen Monomeren, wie z.B. (Meth)acrylate, Styrol und/oder Acrylnitril. Das Verhältnis Pfropfgrundlage zu Pfropfhülle beträgt 99.5:0.5 bis 40:60, vorzugsweise 90:10 bis 50:50 und besonders bevorzugt 80:20 bis 60:40.

Wird das Polymere in der Schmelze oder Lösung gepropft, so werden bevorzugt die reaktiven Monomere allein mit geringen Mengen an Comonomeren polymerisiert. Bevorzugt werden hier EPM- oder EPDM-Copolymere eingesetzt, die mit MSA in der Schmelze gepropft werden.

Komponente C

Als Komponente C kommen übliche Hilfsmittel in den dem Fachmann bekannten Mengen in Betracht, die entweder für die Herstellung der Komponente A oder B oder deren Mischung üblich sind, z.B. Mineralöle, Silikonöle oder andere Gleit- und Entformungsmittel.

Außerdem kann die erfindungsgemäße Mischung aus A und B in der üblichen Weise modifiziert werden. Sie kann daher z.B. mit Polymeren, Verstärkungs- und Füllstoffen, insbesondere Glasfasern, Flammschutzmitteln, Stabilisatoren, Gleit- und Flammschutzmittel versehen werden sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Herstellung einer matten thermoplastischen Formmasse aus der Mischung von A + B

Zur Herstellung einer matten thermoplastischen Formmasse wird die Mischung aus A + B bei erhöhter Temperatur umgesetzt. Im allgemeinen beträgt die Temperatur 120 bis 300°C, insbesondere 140 bis 280°C. Zur Umsetzung geeignet sind an sich bekannte Mischvorrichtungen, wie Brabendermischer, Ein- oder Zweischneckenextruder. Vorzugsweise verwendet man dafür einen Zweischneckenextruder mit im gleichen Sinne rotierenden Schneckenwellen. Es kann so verfahren werden, daß eine Schmelze aus A in Gegenwart von B in einem Schneckenextruder üblicher Bauart bei Verweilzeiten von 1 bis 7 Minuten mit einem Geschwindigkeitsgefälle im radialen Spiel zwischen Kamm und Gehäusewand von mehr als 2000 $sec^{-1}$ bei Temperaturen von 140 bis 240°C umgesetzt wird.

Durch diese Maßnahmen werden die Komponenten A und B intensiv radial gemischt, außerdem wird gewährleistet, daß die Reaktion zwischen den reaktiven Gruppen der Komponenten $b_1$ und $b_2$ homogen abläuft und ein Anhaften des Stoffes an den Schneckenwellen und Gehäusewänden verhindert wird. Es ist bevorzugt, daß die Reaktion in Schneckenmaschinen mit üblichen radialen Spielen von je nach Schneckengröße 0,1-0,6 mm bei Schneckendrehzahlen über 150 U/min erfolgt. So beträgt z.B. die bei einer zweiwelligen Schneckenmaschine mit 53 mm Außendurchmesser der Schnecken und einem Radialspiel von 0,2 mm mit Erfolg angewandte Drehzahl 300 U/min. Hieraus ergibt sich ein maximales Geschwindigkeitsgefälle im gescherten Produkt von 4170 $sec^{-1}$ zwischen Schneckenaußendurchmesser und Gehäuse, also im radialen Spiel gerechnet. Geeignete Knetelemente sind z.B. die in DE-PS 813 154 und DE-PS 940 109 beschriebenen und in den Fig. 2-6 im Querschnitt dargestellten prismatischen Scheiben verschiedener Geometrie, die sich bis auf das maschinentechnisch notwendig kleine Spiel in jeder Stellung gegenseitig abschaben und im Zusammenwirken mit den Gehäusegraten (18, 19) auf den zu mischenden Stoff hoher Scher- und Reibungskräfte ausüben. Mehrere derartige Knetscheiben, auf der Welle in Umfangsrichtung jeweils versetzt angeordnet, ergeben eine Knetzone (7, 8, 9 in Fig. 1).

Die Verweilzeit sowohl in Knet- als auch Reaktionszone beträgt im allgemeinen 0,5 bis 20 Min., bevorzugt 1 bis 7 Minuten.

Die Komponenten der erfindungsgemäßen Mischung aus A und B (gegebenenfalls mit Komponente C, z.B. Schmiermittel) werden vorzugsweise gemeinsam dosiert und in einem Aufschmelzteil aufgeschmolzen. Die Extruderschnecke im Aufschmelzteil enthält bevorzug Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielfältig verwendbar, sie können z.B. zu Werkstoffen oder Folien, verarbeitet werden.

Die in den Beispielen und Vergleichsversuchen beschriebenen Parameter wurden wie folgt bestimmt:

1. Lochkerbschlagzähigkeit $a_{KL}$, in [KJ/m$^2$] nach DIN 53 453.
2. Durchstoßarbeit $W_{50}$ in [N/m] nach DIN 53 443
3. Viskositätszahl, $V_z$, nach DIN 53 726 in DMF bei 25°C.
4. Zur Glanzbestimmung wurden 2 mm Rundscheiben unter den folgenden Bedingungen gespritzt; der Glanz wurde visuell beurteilt.

Bei einer Massetemperatur der Spritzlinge von 260°C, wurden die nachfolgenden Formtemperaturen und zugehörigen Spritzzeiten angewendet.

| Bezeichnung | Formtemperatur [°C] | Spritzzeit [s] |
|---|---|---|
| A | 30 | 0,5 |
| B | 60 | 0,5 |
| C | 30 | 2,2 |
| D | 60 | 2,2 |

Als Vergleichsstandard dienten Proben der Vergleichsversuche I und II. Die Spritzgußmaschine war vom Typ Allrounder der Firma Arburg.

Zur Herstellung erfindungsgemäßer Mischungen und von Vergleichsproben dienten folgende Produkte:

Komponente A:

$A_1$    Ein ABS, bestehend aus 45 Gew.-% Polybutadien (mittlere Teilchengröße 0,3 $\mu$m), gepfropft mit SAN und 55 Gew.-% SAN Copolymer (S:AN = 65:35 der Viskositätszahl 80 ml/g,

$A_2$    Ein ASA, bestehend aus einem mit DCPA vernetzten Polybutylacrylatkautschuk (mittlere Teilchengröße 0,2 $\mu$m), gepfropft mit SAN (45 Gew.-%) und 55 Gew.-% einem S/AN Copolymer, S:AN = 65:35, Viskositätszahl 80 ml/g.

$b_1$    Ein Styrol (69%)-Acrylnitril(21%)-Maleinsäureanhydrid(10 %)Copolymer, Vz = 70

$b_1'$    Ein Styrol(72,9%)-Acrylnitril(22,4)-Maleinsäureanhydrid(4,75)-Copolymer, Vz = 72

$b_2$    Als reaktive Gruppen aufweisender Kautschuk wurde ein Terpolymerisat aus n-Butylacrylat(30%)-Ethylen(67%)-GMA(3%) verwendet.

Nachstehend wird die Herstellung erfindungsgemäßer Mischungen und von matten Formmassen anhand von Beispielen und Vergleichsversuchen näher erläutert. Alle darin genannten Teile und Prozente beziehen sich auf das Gewicht.

Beispiele 1 bis 4 und Vergleichsversuche I und II

Die in der Tabelle genannten Mengen des Kautschuks $b_2$ wurden zunächst im Verhältnis 25:75 mit den Copolymerisaten $b_1$ bzw. $b_1'$ in einem ZSK 30 Extruder der Firma Werner und Pfleiderer bei einer Temperatur von 260°C, vorgemischt.

Die erhaltenen Mischungen (Komponente B) wurden dann in demselben Extruder in den in der Tabelle genannten Mengen mit den Komponenten $A_1$ bzw. $A_2$ in einem ZSK30 Extruder zu den Endabmischungen konfektioniert.

6

Tabelle

| Beispiel | Zusammensetzung | | | | | $a_{kb}$ 23°C [kJ/m²] DIN 53 453 | $W_{50}$ [Nm] 23° | $W_{50}$ −40°C | Glanzmessungen **) | | | |
|---|---|---|---|---|---|---|---|---|---|---|---|---|
| | $A_1$ | $A_2$ | B = (b$_1$ | b$_1$' | b$_2$) | | | | A | B | C | D |
| 1 | 50 | – | 50 | (37,5 | – | 12,5) | 20 | 20 | 4 | s.m. | s.m. | m. | m. |
| 2 | 50 | – | 50 | ( – | 37,5 | 12,5) | 19 | 18 | 3 | s.m. | s.m. | m. | m. |
| 3 | – | 50 | 50 | (37,5 | – | 12,5) | 21 | 22 | – | s.m. | s.m. | m. | m. |
| 4 | 60 | – | 40 | (30 | – | 10) | 23 | 28 | 6 | s.m. | s.m. | m. | m. |

Vergleichsversuche (Standards)

| I | 100 | – | – | | | | 26 | 35 | 17 | g. | g. | g. | g. |
| II | – | 100 | – | | | | 6 | 30 | 1 | g. | g. | g. | g. |

**) s.m. = sehr matt

m. = matt

g. = glänzend

Patentansprüche

1. Mischung aus thermoplastischen Bestandteilen, enthaltend

A 20 - 80 Gew.-%, bezogen auf A + B, eines ersten thermoplastischen Harzes, enthaltend

a₁      60 - 90 Gew.-%, bezogen auf A, mindestens eines vinylaromatischen Kohlenwasserstoffs mit 8 bis 12 C-Atomen

a₂      40 - 10 Gew.-%, bezogen auf A, mindestens eines weiteren monoethylenisch ungesättigten Monomeren aus der Gruppe von Acrylnitril, Methylmethacrylat, N-Phenylmaleinimid oder Mischungen davon

B      80 - 20 Gew.-%, bezogen auf A + B, eines weiteren thermoplastischen Harzes enthaltend eine Mischung aus

b₁      einem thermoplastischen, reaktive Gruppen aufweisenden Copolymerisat und

b₂      einem Elastomeren, das reaktive Gruppen aufweist, <u>dadurch gekennzeichnet</u>, daß die Mischung B enthält, jeweils bezogen auf B,

b₁      50 - 90 Gew.-% des reaktiven Copolymerisates, das aufgebaut ist aus

b₁₁ mindestens 60 Gew.-% mindestens eines vinylaromatischen Kohlenwasserstoffs mit 8 bis 12 C-Atomen

b₁₂ 15 - 35 Gew.-% mindestens eines monoethylenisch ungesättigten Monomeren aus der Gruppe von Acrylnitril, Methylmethacrylat, N-Phenylmaleinimid oder Mischungen davon

b₁₃ 1 -20 Gew.-% mindestens eines weiteren monoethylenisch ungesättigten Monomeren aus der Gruppe von Maleinsäure, Maleinsäureanhydrid, Glycidylmethacrylat, Vinyloxazolin oder Mischungen davon
und

b₂      50 - 10 Gew.-% eines reaktive Gruppen aufweisenden Elastomeren, wobei die reaktiven Gruppen von Monomeren stammen, ausgewählt aus der Gruppe von Maleinsäure, Maleinsäureanhydrid, Glycidylmethacrylat, Vinyloxazolin oder Mischungen davon und einpolymerisiert sind in

b₂₁ lineare oder verzweigte Copolymere mit Tg < 0°C oder aufgepfropft sind auf

b₂₂ übliche Elastomere auf Basis von Polymeren des Butadiens, Copolymerisaten des Butadiens mit bis zu 30 Gew.-% an Comonomeren, wie Styrol und Acrylnitril, Polymeren oder Copolymeren der Acrylsäureester von Alkoholen mit 2 bis 8 C-Atomen, Polymeren der Ethylen-Propylen- oder Ethylen-Propylen-Dien-Reihe (EP- oder EPDM-Kautschuke).

2.    Mischung nach Anspruch 1, enthaltend

30 bis 70 Gew.% A, das wiederum enthält, bezogen auf A,

65 bis 85 Gew.-% a₁ und

35 bis 15 Gew.-% a₂ und

70 bis 30 Gew.-% B, wobei B wiederum enthält, bezogen auf B,

60 bis 80 Gew.-% b₁,

40 bis 20 Gew.-% b₂`

3.    Mischung nach Anspruch 1, enthaltend

35 bis 65 Gew.-% A, das wiederum enthält, bezogen auf A,

65 bis 85 Gew.-% a₁ und

35 bis 15 Gew.-% a₂ und

65 bis 35 Gew.-% B, wobei B wiederum enthält, bezogen auf B,

60 bis 80 Gew.-% b₁, das aufgebaut ist aus b₁₁: 60 bis 80 Gew.-% Styrol, b₁₂: 17,5 bis 35 Gew.-% Acrylnitril und b₁₃: 1 bis 10 Gew.-% Maleinsäureanhydrid und

40 bis 20 Gew.-% b₂, wobei b₂ besteht aus

b₂₁    linearen oder verzweigten Ethylen-n-Butylacrylatcopolymerisaten, die aufgebaut sind aus, bezogen auf b₂₁),

20-98 Gew.-% Ethylen

1,5-60 Gew.-% n-Butylacrylat

0,5-40 Gew.-% Glycidylmethacrylat, Maleinsäure, Maleinsäureanhydrid, Vinyloxazolin oder Gemischen davon

oder aufgepfropft sind auf

b₂₂    als Pfropfgrundlage.

4.    Mischung nach Anspruch 1, enthaltend zusätzlich, bezogen auf 100 Gew.-Teile A, 10-60 Gew.-Teile eines Pfropfmischpolymerisates a₃, aufgebaut aus

a₃₁ 30-70 Gew.-% eines Elastomeren auf Basis von Homopolybutadien, Copolymerisation des Butadiens mit bis zu 30 Gew.-% an Comonomeren aus der Gruppe Styrol, Acrylnitril, Acrylsäurealkylester von Alkoholen mit 1 bis 8 C-Atomen oder Mischungen daraus und

$a_{32}$ 70-30 Gew.-% einer Pfropfhülle aus den Monomeren $a_1$ und $a_2$ im Gew.-Verhältnis 60 bis 90 $a_1$/40 bis 10 $a_2$.

5. Verfahren zur Herstellung einer matten thermoplastischen Formmasse durch Umsetzen der Bestandteile der Mischung gemäß Anspruch 1 bei erhöhter Temperatur.

6. Verfahren nach Anspruch 5, dadurch gekennzeichnet, daß die Umsetzung in einem Schneckenextruder üblicher Bauart bei Verweilzeiten von 1 bis 7 Minuten mit einem Geschwindigkeitsgefälle im radialen Spiel zwischen Kamm und Gehäusewand von mehr als 2000 sec$^{-1}$ bei Temperaturen von 140 bis 240°C in einer Schmelze aus A in Gegenwart von B durchgeführt wird.

**Claims**

1.  A mixture of thermoplastic components, containing

    A       20-80% by weight, based on A + B, of a first thermoplastic resin, containing

    $a_1$     60-90% by weight, based on A, of at least one vinyl-aromatic hydrocarbon of 8 to 12 carbon atoms and

    $a_2$     40-10% by weight, based on A, of at least one further monoethylenically unsaturated monomer selected from the group consisting of acrylonitrile, methyl methacrylate, N-phenylmaleimide and mixtures thereof, and

    B       80-20% by weight, based on A + B, of a further thermoplastic resin containing a mixture of

    $b_1$     a thermoplastic copolymer having reactive groups and

    $b_2$     an elastomer which has reactive groups, wherein the mixture B contains, based in each case on B,

    $b_1$     50-90% by weight of the reactive copolymer which is composed of

    $b_{11}$ at least 60% by weight of at least one vinyl-aromatic hydrocarbon of 8 to 12 carbon atoms,

    $b_{12}$ 15-35% by weight of at least one monoethylenically unsaturated monomer selected from the group consisting of acrylonitrile, methyl methacrylate, N-phenylmaleimide and mixtures thereof and

    $b_{13}$ 1-20% by weight of at least one further monoethylenically unsaturated monomer selected from the group consisting of maleic acid, maleic anhydride, glycidyl methacrylate, vinyl-oxazoline and mixtures thereof
    and

    $b_2$     50-10% by weight of an elastomer having reactive groups, where the reactive groups originate from monomers selected from the group consisting of maleic acid, maleic anhydride, glycidyl methacrylate, vinyloxazoline and mixtures thereof and are polymerized in

    $b_{21}$ linear or branched copolymers having a Tg of < 0°C or are grafted onto

    $b_{22}$ conventional elastomers based on polymers of butadiene, copolymers of butadiene with up to 30% by weight of comonomers such as styrene and acrylonitrile, polymers and copolymers of acrylates of alcohols of 2 to 8 carbon atoms and polymers of the ethylene/propylene or ethylene/propylene/diene series (EP or EPDM rubbers).

2.  A mixture as claimed in claim 1, containing from 30 to 70% by weight of A, which in turn contains, based on A,
    from 65 to 85% by weight of $a_1$ and
    from 35 to 15% by weight of $a_2$, and
    from 70 to 30% by weight of B, where B in turn contains,
    based on B,
    from 60 to 80% by weight of $b_1$ and
    from 40 to 20% by weight of $b_2$.

3.  A mixture as claimed in claim 1, containing from 35 to 65% by weight of A, which in turn contains, based on A,
    from 65 to 85% by weight of $a_1$ and
    from 35 to 15% by weight of $a_2$, and

9

from 65 to 35% by weight of B, where B in turn contains,
based on B,
from 60 to 80% by weight of $b_1$, which is composed of $b_{11}$:
from 60 to 80% by weight of styrene, $b_{12}$: from 17.5 to 35% by weight of acrylonitrile and $b_{13}$: from 1
to 10% by weight of maleic anhydride, and
from 40 to 20% by weight of $b_2$, where $b_2$ consists of

$b_{21}$     linear or branched ethylene/n-butyl acrylate copolymers which are composed of, based on $b_{21}$),

20-98% by weight of ethylene,
1.5-60% by weight of n-butyl acrylate and
0.5-40% by weight of glycidyl methacrylate, maleic acid, maleic anhydride, vinyloxazoline or a mixture
thereof,
or are grafted onto

$b_{22}$     as a grafting base.

4. A mixture as claimed in claim 1, additionally containing, based on 100 parts by weight of A, 10-60 parts
by weight of a graft copolymer $a_3$, composed of

$a_{31}$     30-70% by weight of an elastomer based on homopolybutadiene, copolymers of butadiene
with up to 30% by weight of comonomers selected from the group consisting of styrene,
acrylonitrile, alkyl acrylates of alcohols of 1 to 8 carbon atoms and mixtures thereof,
and

$a_{32}$     70-30% by weight of a graft consisting of the monomers $a_1$, and $a_2$ in a weight ratio of from
60 to 90 of $a_1$/from 40 to 10 of $a_2$.

5. A process for the preparation of a dull thermoplastic molding material by reacting the components of
the mixture as claimed in claim 1 at elevated temperatures.

6. A process as claimed in claim 5, wherein the reaction is carried out in an extruder of conventional
design in a residence time of from 1 to 7 minutes with a velocity gradient in the radial play between the
outer diameter of the screw and the barrel wall of more than 2,000 $sec^{-1}$ at from 140 to 240°C in a
melt of A in the presence of B.

**Revendications**

1. Mélange de composants thermoplastiques, contenant

A     de 20 a 80% en poids, par rapport à A + B, d'une première résine thermoplastique contenant
$a_1$ 60 à 90% en poids, par rapport à A, d'au moins un hydrocarbure vinylaromatique à 8-12
atomes de carbone,
$a_2$ 40 à 10% en poids, par rapport à A, d'au moins un autre monomère à insaturation
monoéthylénique du groupe de l'acrylonitrile, du méthacrylate de méthyle, du N-phénylmaléimide ou de mélanges de ceux-ci,

B     de 80 à 20% en poids, par rapport à A + B, d'une autre résine thermoplastique contenant un
mélange
$b_1$ d'un copolymère thermoplastique comportant des groupements réactifs et
$b_2$ d'un élastomère qui comporte des groupements réactifs,
caractérisé en ce que le mélange B contient, chaque fois par rapport à B,

$b_1$     de 50 à 90% en poids du copolymère réactif, qui est constitué par
$b_{11}$ au moins 60% en poids d'au moins un hydrocarbure vinylaromatique à 8-12 atomes de
carbone,
$b_{12}$ 15 à 35% en poids d'au moins un monomère à insaturation monoéthylénique du groupe
de l'acrylonitrile, du méthacrylate de méthyle, du N-phénylmaléimide ou de mélanges de
ceux-ci,
$b_{13}$ 1 à 20% en poids d'au moins un autre monomère à insaturation monoéthylénique du
groupe de l'acide maléique, de l'anhydride maléique, du méthacrylate de glycidyle, de la
vinyloxazoline ou de mélanges de ceux-ci,
et

$b_2$     de 50 à 10% en poids d'un élastomère comportant des groupements réactifs, les groupements réactifs provenant de monomères choisis dans le groupe de l'acide maléique, de l'anhydride maléique, du méthacrylate de glycidyle, de la vinyloxazoline ou de mélanges de ceux-ci, et étant contenus en liaison polymère dans

$b_{21}$ des copolymères linéaires ou ramifiés à Tg < 0° C ou étant greffés sur

$b_{22}$ des élastomères usuels à base de polymères du butadiène, de copolymères du butadiène avec 30% en poids au maximum de comonomères tels que le styrène et l'acrylonitrile, de polymères ou de copolymères des esters d'acide acrylique et d'alcools à 2-8 atomes de carbone, de polymères de la série éthylène/propylène ou éthylène/propylène/diène (caoutchoucs EP ou EPDM).

2. Mélange selon la revendication 1, contenant

30 à 70% en poids de A, qui contient à son tour, par rapport à A,

65 à 85% en poids de $a_1$ et

35 à 15% en poids de $a_2$, et

70 à 30% en poids de B, B contenant à son tour, par rapport à B,

60 à 80% en poids de $b_1$,

40 à 20% en poids de $b_2$.

3. Mélange selon la revendication 1, contenant

35 à 65% en poids de A, qui contient à son tour, par rapport à A,

65 à 85% en poids de $a_1$ et

35 à 15% en poids de $a_2$, et

65 à 35% en poids de B, B contenant à son tour, par rapport à B,

60 à 80% en poids de $b_1$, qui se compose de $b_{11}$: 60 à 80% en poids de styrène, de $b_{12}$: 17,5 à 35% en poids d'acrylonitrile et de $b_{13}$: 1 à 10% en poids d'anhydride maléique, et

40 à 20% en poids de $b_2$, $b_2$ étant constitué par

$b_{21}$     des copolymères éthylène/acrylate de n-butyle linéaires ou ramifiés qui se composent, par rapport à $b_{21}$), de

20-98% en poids d'éthylène,

1,5-60% en poids d'acrylate de n-butyle,

0,5-40% en poids de méthacrylate de glycidyle, d'acide maléique, d'anhydride maléique., de vinyloxazoline ou de mélanges de ceux-ci,

ou sont greffés sur

$b_{22}$     en tant que base de greffage.

4. Mélange selon la revendication 1, contenant en plus, par rapport à 100 parties en poids de A, 10 à 60 parties en poids d'un copolymère greffé $a_3$ constitué par

$a_{31}$     30-70% en poids d'un élastomère à base d'homopolybutadiène, de copolymères du butadiène avec 30% en poids au maximum de comonomères du groupe du styrène, de l'acrylonitrile, d'esters de l'acide acrylique et d'alcools à 1-8 atomes de carbone ou de mélanges de ceux-ci, et

$a_{32}$     70-30% en poids d'une enveloppe de greffage composée des monomères $a_1$ et $a_2$ dans un rapport pondéral $a_1/a_2$ de 60-90 : 40-10.

5. Procédé de préparation d'une masse à mouler thermoplastique mate, par réaction des constituants du mélange selon la revendication 1 à température élevée.

6. Procédé selon la revedication 5, caractérisé en ce que la réaction est conduite dans une extrudeuse à vis sans fin de type habituel, avec des temps de séjour de 1 à 7 mn, avec un gradient de cisaillement dans le jeu radial entre le peigne et la paroi du carter de plus de 2000 $s^{-1}$, à des températures de 140 à 240° C, dans une masse fondue de A en présence de B.